# EUROPEAN PATENT SPECIFICATION

(11) **EP 0 828 103 B1**
(45) Date of publication and mention of the grant of the patent: **20.11.2002**
(21) Application number: 97306815.8
(22) Date of filing: 03.09.1997
(51) Int. Cl.: F16K 31/26

(54) **Float valve**
Schwimmerventil
Soupape à flotteur

(30) Priority: 04.09.1996 GB 9618417; 29.04.1997 GB 9708753
(43) Date of publication of application: 11.03.1998
(73) Proprietor: Cistermiser Limited, Woodley, Reading RG5 3AN (GB)
(72) Inventor: North, Alan David, Nr Wargrave, Reading RG10 8QS (GB)
(74) Representative: Abbie, Andrew Kenneth

(56) References cited:
- FR-A- 2 681 891
- US-A- 2 760 204
- US-A- 3 158 173
- US-A- 4 230 145

## Description

The invention relates to valve apparatus for use in fluids storage vessels and particularly, but not exclusively, to such valve apparatus for use in water closet cisterns in place of the syphon-type flushing systems conventionally used in the United Kingdom.

An important consideration in designing valve apparatus for fluids storage vessels can be to prevent the supply of fluid for refilling the vessel whilst an outlet valve of the vessel is in an open condition. For example, in a water cistern it is undesirable for water to be fed into the cistern if the outlet valve to the cistern is not closed since water will then flow directly into the lavatory pan and be wasted. An example of a prior art valve apparatus is seen in US-A-3158173.

The invention provides valve apparatus for use in fluids storage vessels, the apparatus comprising an inlet for receiving a pressurised fluid to be stored in such a storage vessel, an outlet for discharging said pressurised fluid into said vessel, means for controlling flow of said pressurised fluid between said inlet and outlet, and outlet valve means moveable from a flow preventing position to a flow permitting position to permit discharge of fluid stored in said vessel via an opening in said vessel, wherein the apparatus being adapted such that, in use, discharge of said pressurised fluid from said outlet to refill said vessel is at least delayed following movement of the outlet valve means to its flow permitting position, characterised by means operatively connected between the outlet valve means and the flow controlling means to positively prevent activation of said flow controlling means to allow re-filling of the vessel unless and until said outlet valve means has at least substantially returned to said flow preventing position.

Preferably, the flow'controlling means comprises level detecting means for detecting the level of said fluid stored in said vessel.

Preferably, said level detecting means comprises float means.

The apparatus may further comprise locating means for locating said outlet valve means relative to said opening.

The locating means may comprise means defining a discharge passage, said passage defining means being securable in said opening of said vessel.

Preferably, the locating means defines a valve seat which is engaged by said outlet valve means when in said flow preventing position.

Preferably, said outlet valve means is adapted to be moved from said flow preventing position to a said flow permitting position by means of a force generated by a pressurised fluid.

Preferably, said outlet valve means comprises a body and means defining a chamber for said body, the arrangement being such that, in use, a first side of said body can be selectively exposed to said pressurised fluid to generate said force for moving the outlet valve means from said flow preventing position its a said flow permitting position.

Preferably, a second side of said body disposed opposite said first side, is exposed to atmospheric pressure.

Preferably, said chamber defining means is releasably fitted to the apparatus.

Preferably, the apparatus further comprises a multi-port valve for actuating said outlet valve means, said valve having a first port for receiving said pressurised fluid and being adapted to selectively communicate said pressurised fluid with said first side of the body via a second said port to move said outlet valve means from said flow preventing position and exhaust said pressurised fluid acting on said first side via a third said port to permit said outlet valve means to return to said flow preventing position.

Preferably, said multi-port valve has a respective member for blocking flow through said second port and said third port, said members being interconnected such that when one of said second and third ports is open the other said port is blocked.

Preferably, said member for blocking said second port comprises a diaphragm each side of which, in use, is exposed to said pressurised fluid and said multi-port valve is provided with exhaust means for selectively exhausting the said pressurised fluid acting on the side of said diaphragm remote from said second port to cause said diaphragm to open said second port.

Preferably, said exhaust means comprises a latching solenoid valve.

Preferably, the apparatus further comprises an infrared sensing device for providing a signal for actuating said exhaust means.

Preferably, said multi-port valve is a three-port valve.

Preferably, said outlet valve means is adapted to block the flow of pressurised fluid to prevent discharge of pressurised fluid from said outlet to refill said vessel until said outlet valve means has substantially returned to a flow preventing position.

The body may be adapted to block said outlet for preventing discharge of pressurised fluid therefrom.

The discharge of said pressurised fluid from said outlet may be prevented by blocking an outlet port of said multi-port valve.

The said outlet port may be said third port.

Preferably, the apparatus comprises means for preventing said float means from moving to allow flow of pressurised fluid between said inlet and outlet for discharge from said outlet to refill said vessel until said outlet valve means has substantially returned to said flow preventing position.

Preferably, said means for preventing movement of said float means comprises linkage means connected with said outlet valve means and engageable with said float means.

Preferably, said linkage means defines a stop surface which is arranged to cooperably engage said float means to prevent movement thereof when said outlet valve means is moved from said flow preventing position and permit said float means to disengage when said outlet valve means has at least substantially returned to said flow preventing position.

Preferably, said means for preventing movement of said float means is adapted to be able to lift said float means from a position in which flow of pressurised fluid between said inlet and outlet is allowed to a position in which said flow is prevented by movement of said outlet valve means from said flow preventing position.

Preferably, said linkage means defines a support surface extending transversely of said stop surface for lifting said float means.

Preferably, said means for preventing movement of said float means is adapted to permit manual operation of said outlet valve means.

The flow controlling means may comprise a multi-port filling valve.

The filling valve may comprise a member for selectively blocking an outlet port thereof, said filling valve being arranged such that, in use, each side of said member is exposed to said pressurised fluid and exhausting the said fluid acting on one side of said member causes unblocking of said outlet port.

The outlet valve may be adapted to block a port of said filling valve to prevent discharge of pressurised fluid from said outlet to refill said vessel until said outlet valve means has substantially returned to a flow preventing position.

A port of said filling valve may define said inlet for receiving a pressurised fluid to be stored in said vessel.

The first port of said multi-port valve for actuating said outlet valve means may define said inlet for receiving a pressurised fluid to be stored in said vessel.

The apparatus may comprise biassing means for biassing said outlet valve means to said flow preventing position.

The biassing means may comprise a compression spring.

The outlet valve means may be adapted to permit overtravel when returning to said flow preventing position.

The outlet valve means may comprise sealing means for sealingly preventing discharge of fluid via said opening in said vessel, said sealing means comprising a non-planar diaphragm for permitting said overtravel.

The apparatus may comprise means for conducting pressurised fluid to said chamber for acting on opposed sides of said body and exhaust means for selectively exhausting from said chamber the said pressurised fluid acting on a first of said opposed sides, the arrangement being such that, in use, said outlet valve means can be moved from said flow preventing position to a said flow permitting position by the said pressurised fluid acting on the second of said opposed sides by exhausting the said pressurised fluid acting on the first of said opposed sides.

The apparatus may comprise biassing means acting on the first of said opposed sides for biassing said outlet valve means to said flow preventing position.

The conducting means may comprise a first inlet to said chamber through which said pressurised fluid is conducted to said first opposed side and a second inlet to said chamber through which said pressurised fluid is conducted to said second opposed side, said first inlet being adapted to conduct said pressurised fluid to said chamber at a slower rate than said exhaust means exhausts from said chamber the said pressurised fluid acting on said first opposed side.

The conducting means may comprise passage defining means in flow communication with said first inlet and said second inlet.

The body may comprise a cup-washer.

The body may comprise a rolling diaphragm.

The exhaust means may comprise a latching solenoid valve.

The apparatus may comprise means for operating said solenoid valve in response to a control signal.

The apparatus may comprise an infrared sensor device for mounting in a wall of such a vessel to provide said control signal.

The apparatus may comprise a housing for said operating means and wherein said exhaust means comprises conduit means extending from said chamber defining means, said housing being mountable on a distal end of said conduit means such that in use said housing is mounted remote from and substantially above said chamber.

The solenoid valve may be disposed in said housing.

The apparatus may comprise filling valve means comprising means defining a valve chamber having a valve member disposed therein, said valve member being moveable between a closed position and open positions according to fluid pressure acting on opposed sides thereof and said conducting means being adapted to conduct said pressurised fluid to said valve chamber for acting on said opposing sides of the valve member.

The filling valve means may define said outlet.

The apparatus may comprise a latching solenoid in flow communication with said valve chamber for selectively exhausting from said valve chamber the said pressurised fluid acting on the second of said opposing sides.

The float means may be arranged for actuating said latching solenoid.

The float means may be arranged to be guided by said conduit means.

The invention also includes valve apparatus for use in fluids storage vessels, said valve apparatus comprising an outlet valve means for controlling discharge of fluid from such a vessel and a filling valve means for controlling input of fluid to such a vessel, each said valve means having or being associated with a chamber containing a member having a first side and a second side, each of which sides is exposed, in use, to a pressurised fluid and each said member being independently moveable to open the respective said valve means by the said pressurised fluid acting on the second said side thereof when the said pressurised fluid acting on the first said side thereof is released, and further comprising means for actuating said outlet valve means and filling valve means, said actuating means comprising means operatively connected between the outlet valve means and the filling valve means to positively prevent input of fluid from said filling valve means to refill said vessel unless and until said outlet valve means has at least substantially returned to a discharge preventing position.

The invention also includes valve apparatus for use in fluids storage vessels, said valve apparatus comprising filling valve means operable by float means, outlet valve means for controlling discharge of fluid from such a vessel, and means operatively connected between said filling valve means and said outlet valve means to positively prevent discharge of fluid from said filling valve means to refill such a vessel unless and until said outlet valve means is at least substantially closed.

In order that the invention may be well understood some embodiments thereof, which are given by way of example only, will now be described with reference to the accompanying drawings, in which:
Figure 1 is a side elevation partially cutaway and in section of a first embodiment valve apparatus for a fluids storage vessel showing outlet valve means thereof in a flow permitting position;
Figure 2 is a view corresponding to Figure 1 showing the outlet valve means in a flow preventing position;
Figure 3 is a schematic illustration of the apparatus of Figure 1 with the outlet valve means in a flow preventing condition;
Figure 4 is a schematic illustration of the apparatus of Figure 1 in the operating condition shown in Figure 1;
Figure 5 is a schematic illustration of the apparatus of Figure 1 in the operating condition shown in Figure 2;
Figure 6 is a schematic illustration of a second embodiment of valve apparatus for use in a fluids storage vessel with an outlet valve means thereof in a flow preventing position;
Figure 7 is a schematic illustration of the valve apparatus of Figure 6 with the outlet valve means in a flow permitting position;
Figure 8 is a schematic illustration of the valve apparatus of Figure 6 with the outlet valve means returned to a flow preventing position;
Figure 9 is a schematic illustration of a third embodiment of valve apparatus for use in a fluids storage vessel with the outlet valve means in a flow preventing position;
Figure 10 is a schematic illustration of the valve apparatus of Figure 9 showing the outlet valve means with a flow permitting position;
Figure 11 is a schematic illustration of the valve apparatus of Figure 9 showing the outlet valve means returned to a flow preventing position;
Figure 12 is a sectional front elevation of a water closet cistern provided with a fourth embodiment of a valve apparatus for use in a fluids storage vessel;
Figure 13 is a sectioned side elevation of the valve apparatus of Figure 12; and
Figure 14 shows a modified version of the valve apparatus of Figure 13.

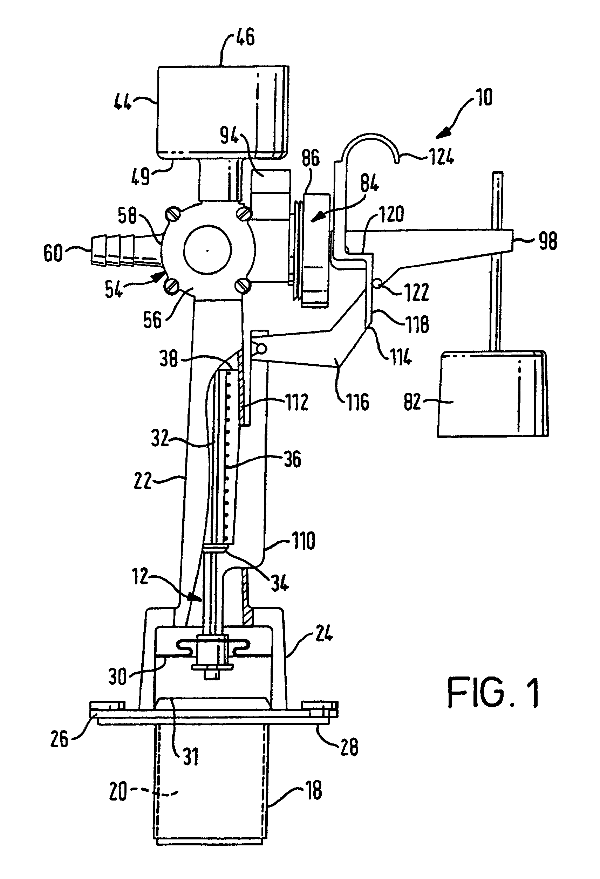

A first embodiment of valve apparatus (generally designated 10) suitable for use as a flushing valve in a water closet cistern will now be described with reference to Figures 1 to 4.

The valve apparatus 10 comprises an outlet valve means 12 and locating means for locating the outlet valve means relative to an opening in a water closet cistern 16. The locating means comprises a tubular member 18 which defines a discharge passage 20. An external surface of the tubular member 18 is provided with threading whereby the tubular member can be secured to the cistern by means of a nut (not shown).

The locating means further comprises a generally tubular body 22 which houses the outlet valve means 12. At one end thereof, the tubular body defines a fenestrated cup-like body 24. The cup-like body 24 has a flange 26 at the free end thereof. The flange 26 is configured to engage a mating flange 28 of the tubular member 18 to provide a twist-lock fitting whereby the tubular body 22 can be releasably fitted to the tubular member 18.

The outlet valve means 12 comprises sealing means in the form of a non-planar diaphragm 30. The tubular member 18 defines a valve seat 31 which is sealingly engaged by the diaphragm 30 when the outlet valve means 12 is in a flow preventing position.

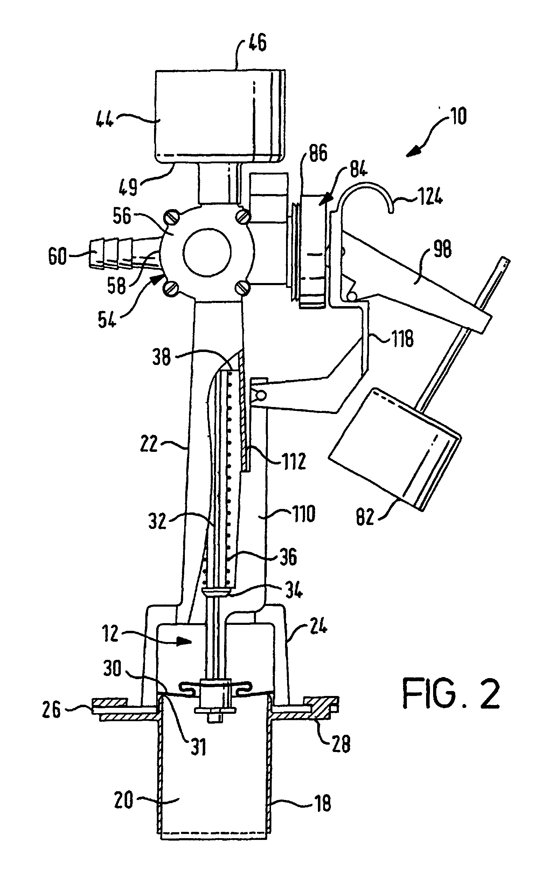

Referring to Figures 1 and 2 it will be seen that the diaphragm 30 is bellows-like in cross-section. This form permits overtravel of the outlet valve means when returning from a flow permitting position to a flow preventing position. The diaphragm 30 is fitted onto a plunger shaft 32 which extends upwardly in the tubular body 22.

A flange 34 is provided on the plunger shaft 32. A compression spring 36 extends about the plunger shaft and has one end seated on the flange 34. The other end of the compression spring is braced against a shoulder 38 defined by the tubular body 22. By means of this arrangement, the outlet valve means 12 is biassed to a flow preventing position as shown in Figure 2.

The outlet valve means 12 further comprises a piston 40 which is housed for relative sliding movement in a chamber 42 defined by a housing 44. The housing 44 is open to atmosphere at its free end 46.

The underside 48 of the piston 40 (as viewed in the drawings) is secured to the plunger shaft 32 which penetrates the end of the piston housing 44 at its end 49 remote from the free end 46. The underside 48 of the piston is selectively exposable to pressurised water which generates a force acting on the piston by means of which the outlet valve means 12 is moveable from a flow preventing position to a flow permitting position.

The valve apparatus 10 further comprises a multi-port valve 54 for actuating the outlet valve means 12. The multi-port valve 54 has three ports which are defined by a valve housing 56 which is formed integrally with the tubular body 22 and disposed intermediate the tubular body and the piston housing 44. The piston housing is releasably securable to the valve housing 56, preferably by a screw fitting arrangement.

The first port 58 of the three port valve 54 is an inlet port defined by a tubular projection 60 which extends outwardly of the valve housing 56 and is formed with barbs for retaining a flexible supply hose. Pressurised water from the water main or a header tank is supplied to the three port valve 54 by means of such a flexible hose fitted on the projection 60.

The three-port valve 54 has a respective member 62, 64 for blocking flow through its second port 66 and third port 68. The members 62, 64 are interconnected such that when one of the second and third ports is open, the other is blocked. The member 62 for blocking the second port 66 is a flexible diaphragm.

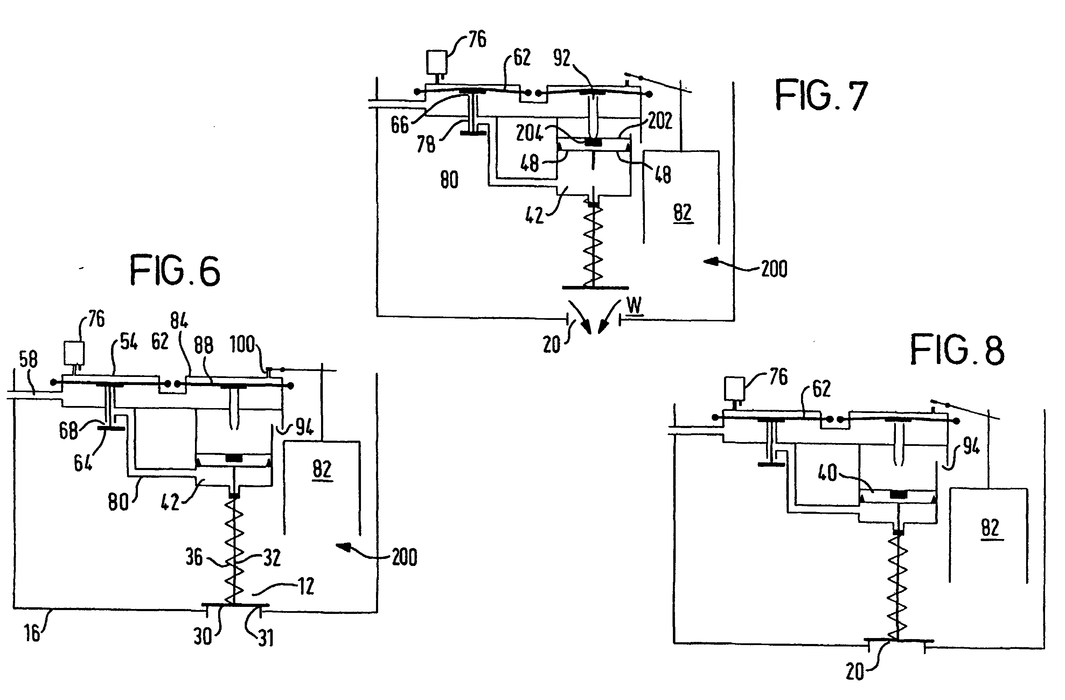

The opposed sides of the diaphragm 62 are each exposed to pressurised water received via the inlet port 58. Referring to Figure 5, pressurised water is supplied to the side 74 of the diaphragm disposed remote from the inlet port 58 (the upperside as viewed in the drawings) by means of one or more small apertures in the diaphragm or one or more passages defined by the valve housing 56 (one such passage is indicated by dashed lines in Figures). For the sake of convenience, in the description which follows, reference will be made to "the aperture" in the diaphragm; this should not be taken as limiting. A latching solenoid valve 76 is provided for selectively exhausting the pressurised water acting on the upperside 74 of the diaphragm 62. An infra red sensing device (not shown) can be used for actuating the solenoid valve 76 as explained in more detail below.

The second port 66 and third port 68 are defined by and communicate via a passage 78 defined within the valve housing 56. A branch passage 80 extends from the passage 78 to the piston chamber 42 such that pressurised water can be supplied to and exhausted from the piston chamber 42 via the second and third ports 66, 68 respectively.

The valve apparatus 10 further comprises a float 82 for detecting the level of the water stored in the cistern 16 and a multi-port filling valve 84 operable by the float.

The filling valve 84 comprises a valve housing 86 and a valve member in the form of a flexible diaphragm 88 which is disposed in the valve housing 86. The filling valve housing 86 defines an inlet port 90 for receiving pressurised water to be stored in the cistern 16 and an exit port 92 which is indicated in Figure 5. The exit port 92 is connected to an outlet 94 of the valve apparatus 10 by a passage 96 which extends therebetween. The outlet 94 is arranged such that, in use, it will usually be disposed above the level of the water stored in the cistern to prevent back-syphoning of the stored water into the water main or header tank.

The opposed sides of the filling valve diaphragm 88 are exposed, in use, to the pressurised water received via the inlet port 90. The float 82 is pivotally mounted to the filling valve housing 86 by means of a lever arm 98. The lever arm 98 carries a seal (not shown) which blocks an exhaust aperture 100 in the filling valve housing 86 when the float is in the raised position as shown in Figures 1, 3 and 4. When the float is not held in such a raised position, the lever arm seal no longer blocks the exhaust aperture 100 thereby allowing water acting on the side of the diaphragm disposed remote from the exit port 92 to exhaust from the filling valve housing into the cistern 16. As with the diaphragm 62 of the three-port valve 54 water is supplied to the side of the diaphragm remote from the supply side of the valve either by means of one or more apertures in the diaphragm or one or more suitably arranged passages (not shown) defined by the filling valve housing. Again, for the sake of convenience, in the description which follows, reference will be made to "the aperture" in the diaphragm; this should not be taken as limiting.

The valve apparatus 10 further comprises means for preventing the float from moving from the raised position shown in Figure 1 whilst the outlet valve means 12 is in a flow permitting position, even though the water level in the cistern may have fallen such that the float is no longer supported by the stored water.

The movement preventing means comprises an arm 110 formed integrally with the plunger shaft 32. The arm 110 extends through an elongate slot 112 which is provided in the tubular body 22 and extends in the lengthwise direction thereof. A lever element 114 is fixed to the arm 110 at the free end thereof. The lever element 114 has a link portion 116 which is linked to and extends transversely of the arm 110. The lever element 114 defines a stop surface 118 and a support surface 120. The stop surface 118 extends from the end of the link portion 116 disposed remote from the arm 110 in a direction generally parallel to the axis of the plunger shaft 32 whilst the support surface 120 is contiguous with and extends generally perpendicular to the stop surface. The lever element 114 is supported by the arm 110 and means (not shown) are provided on the filling valve housing 86 to constrain the lever element 114 to move only in directions generally parallel to the axis of the plunger shaft 32. A rod like projection, or stop, 122 is carried on the float lever arm 98 for engaging the stop surface 118 and support surface 120.

The lever element 114 defines a hook 124 at its free end. The hook 124 allows the valve apparatus 10 to be manually operated whenever this proves desirable.

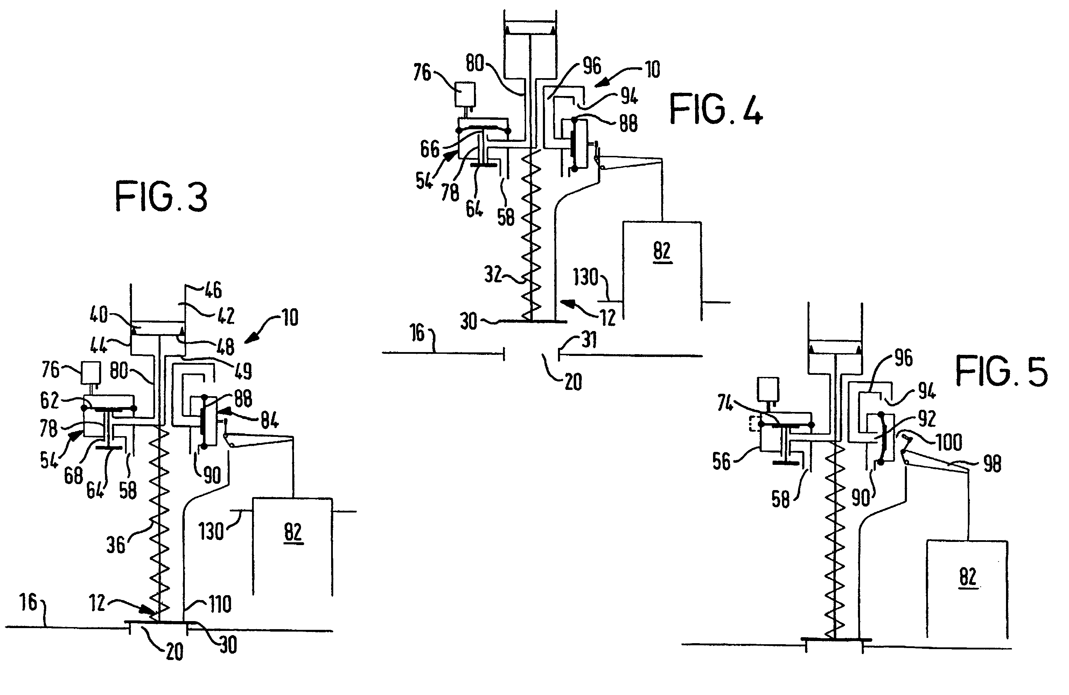

Use of the valve apparatus 10 will now be described with reference to Figures 3 to 5.

Figure 3 shows the valve apparatus 10 in an initial condition with the outlet valve means 12 in a flow preventing position and the float 82 held in a raised condition by the level of water 130 stored in the cistern 16. Pressurised water is supplied to the multi-port valve 54 and the filling valve 84 via flexible pipes (not shown) which feed their respective inlet ports 58, 90. In this condition, each side of the diaphragms 62, 88 is exposed to the pressurised water and is therefore in an equilibrium state maintaining the valves 54 and 84 in a closed condition. In this condition, the multi-port valve 54 prevents the supply of pressurised water to the underside 48 of the piston 40 and exposes that side of the piston to atmospheric pressure via the passages 78, 80 extending between the piston chamber 42 and the third port 68 of the valve. Since both sides of the piston 40 are exposed to atmospheric pressure there is no net force acting across the piston and the outlet valve means is biassed to and held in a flow preventing position by means of the compression spring 36.

In order to open the valve apparatus 10 to flush a lavatory a trigger signal is required. This can be provided manually by means of a switch or by means of a sensing device. In a preferred arrangement an infrared sensing device is used. The infrared sensing device can be mounted in the cistern or elsewhere adjacent the lavatory such that it can be operated by a user passing his/her hand in front of it. Alternatively, the sensing device can be arranged to be operated by a user simply approaching the lavatory. In either case, the trigger signal is passed to the latching solenoid 76 in the form of an electrical pulse by means of a suitable control circuit.

When the latching solenoid 76 is pulsed, a plunger thereof is raised to a flow permitting position and held there by magnetic attraction. The pressurised water acting on the side 74 of the diaphragm adjacent the solenoid valve is exhausted into the cistern 16 causing the diaphragm to be lifted away from the second port 66 to the position shown in Figure 4 by the pressurised water acting on its side opposite to the side 74. It will be appreciated that in order for this to occur, the aperture in the diaphragm is sized such that water passes therethrough at a much slower rate than it is exhausted via the solenoid valve 76. As the second port 66 of the multi-port valve 54 is opened by the movement of the diaphragm 62, the third port 68 is closed by the member 64. Accordingly, the underside of piston 40 is fed with pressurised water via the second port 66 and passages 78, 80 thereby exposing the underside 48 of the piston to the pressure of the water which generates a lifting force which causes the outlet valve means 12 to rise. In particular, the piston 40 rises in the chamber 42 and lifts the diaphragm 30 away from the valve seat 31. With the valve apparatus 10 now in a flow permitting condition, the water in the cistern 16 is able to pass through the apertures in the fenestrated cup-like body 24 and exit the cistern via the discharge passage 20.

Referring to Figures 1 and 4 which show the same condition of the valve apparatus, it is to be noted that whilst the outlet valve means 12 is in a flow permitting position and the water level 130 falls, the float 82 is prevented from moving with the water level and therefore the filling valve 84 remains closed. This is because when the plunger shaft 32 rises with the piston 40 to open the valve apparatus 10, the stop surface 118 is brought into engagement with the stop 122 carried by the float lever arm 98. It will be apparent from Figure 1 that the arrangement is such that whilst the stop 122 engages the stop surface 116, the float 82 cannot pivot downwardly as the water level drops but is instead held in position so that the exhaust aperture 100 remains closed.

When the flushing cycle is complete, the control circuitry provides an electrical pulse to the solenoid valve 76 causing it to close. Pressurised water fed into the multi-port valve 54 via its inlet port 58 slowly makes its way past the diaphragm 62 via the aperture therein and gradually restores the pressure balance across the diaphragm causing it to close the second port 66; this is the position shown in Figure 5. As the second port is closed, the third port 68 is opened allowing the pressurised water acting on the underside 48 of the piston 40 to exhaust to the cistern 16. Each side of the piston is thus subject to atmospheric pressure allowing the biassing force of the spring 36 to return the outlet valve means 12 to a flow preventing position in which the diaphragm 30 sealingly engages the valve seat 31 preventing further discharge of water from the cistern 16.

Referring to Figures 2 and 5 which show the same condition of the valve apparatus 10, it will be appreciated that as the outlet valve means 12 descends, the stop surface 116 is moved downwardly relative to the stop 122 until it no longer engages the stop. The float is then unsupported and falls opening the exhaust aperture 100 so that the pressurised water acting on the side of the filling valve diaphragm 88 adjacent the exhaust aperture 100 is exhausted into the cistern 16. The aperture in the diaphragm 88 is sized such that water is exhausted via the aperture 100 at a faster rate than it can pass across the diaphragm. The thus generated reduction in the pressure acting on the side of the diaphragm adjacent the exhaust aperture 100 causes the diaphragm to move away from the exit port 92 under the influence of the pressurised water supplied to the filling valve 84 via its inlet port 90. Pressurised water is thus able to pass through the inlet port 90 into the passage 96 and is discharged into the cistern via the outlet 94. As the cistern is filled with water discharged from the outlet 94, the float 82 gradually rises from the position shown in Figures 2 and 5 supported by the water until the float assumes the position shown in Figure 3 and the exhaust aperture 100 is closed.

With the exhaust aperture 100 closed, pressurised water passing through the aperture in the diaphragm 88 gradually raises the pressure acting on the side of the diaphragm disposed remote from the inlet port 90 causing the diaphragm to move to the position shown in Figure 3 in which the exit port 92 is again blocked and the supply of water from the inlet port 90 to the outlet 94 is interrupted. A flushing cycle is thereby completed and the valve apparatus 10 is restored to an equilibrium state ready to commence a new flushing cycle when required.

It will be appreciated that in the valve apparatus 10 an interlock is provided between the outlet valve means 12 and the filling valve 84 so that pressurised water cannot pass from the inlet port 90 to the valve apparatus outlet 94 to refill the cistern 16 during a flushing cycle until the outlet valve means 12 returns to a flow preventing position. This is because whenever the outlet valve means 12 is moved away from the flow preventing condition the stop surface 116 is simultaneously moved into engagement with the stop 122 on the float lever arm 98 thereby preventing the filling valve 84 from opening to permit the discharge of water from the outlet 94. The interlock is such that the filling valve 84 is opened only when the outlet valve means 12 is in a closed, or at least substantially closed, position. Accordingly, if the outlet valve means 12 fails and sticks in a flow permitting condition, water is not wasted.

Referring to Figure 2, it will be noted that when the outlet valve means 12 is initially returned to the flow preventing position and there is insufficient water in the cistern to support the float 82, the float is supported by the support surface 120 which is engaged by the stop 122. If the outlet valve means 12 is then moved from the flow preventing position, the float is lifted by the upwardly moving support surface 120 to a position in which the exhaust aperture 100 is blocked; in this position the stop 122 is engaged by the stop surface 118. Thus, if the outlet valve means 12 is moved from the flow preventing position whilst the cistern is in the process of being filled, the filling valve 84 will be closed preventing the discharge of water from the valve apparatus outlet 94.

As indicated above, the construction of the diaphragm 30 is such as to permit overtravel of the outlet valve means 12 when it returns from a flow permitting position to the flow preventing position. It will be appreciated that this overtravel is necessary to completely disengage the stop surface 118 and the stop 122. If no overtravel is provided, the interlock mechanism has to be configured such that the filling valve 84 opens fractionally before the outlet valve means is fully closed. It will also be appreciated that overtravel can be provided otherwise than by means of a non-planar diaphragm. For example, overtravel can be obtained by having the sealing means non-rigidly attached to the plunger shaft and providing a restoring spring to act in the direction opposite to the biassing spring 36.

As a further measure to increase the security of the valve apparatus 10 it is envisaged that the apertures of the fenestrated cup may be covered by a mesh in order to avoid the possibility of particles becoming trapped between the sealing diaphragm 30 and the valve seat 31. In the case where the cup-like body 24 and tubular body 22 is formed as a plastics moulding, it is envisaged that the mesh may be moulded integrally therewith.

A second embodiment of valve apparatus (generally designated 200) suitable for use as a flushing valve in a water closet cistern will now be described with reference to Figures 6 to 8.

The valve apparatus 200 corresponds in many respects to the valve apparatus 10 and to avoid unnecessary repetition, the description which follows will concentrate principally on those features which are different; like or similar features will be described using the reference numerals applied to the valve apparatus 10.

The main difference between the valve apparatus 10 and the valve apparatus 200 is that the interlock which prevents filling of the cistern 16 whilst the outlet valve means 12 is in a flow permitting position is not obtained mechanically by preventing movement of the float 82. Instead, the outlet valve means 12 acts directly on the multi-port filling valve 84. The structural differences are (i) that only one water inlet is provided since the filling valve 84 receives its supply of pressurised water from the multi-port valve 54; (ii) the exit port 92 of the filling valve discharges into the piston chamber 42 and the valve apparatus outlet 94 leads from the piston chamber 42.

Figure 6 shows that valve apparatus 200 in an equilibrium condition with the outlet valve means 12 spring-biassed to a flow preventing position in which the diaphragm 30 engages the valve seat 31. In this condition, each side of the respective diaphragms 62, 88 is exposed to pressurised water at the same pressure thus maintaining the valves 54, 84 in a closed condition. In this condition, the multi-port valve 54 prevents the supply of pressurised water to the underside 48 of the piston and exposes that side of the piston to atmospheric pressure via the passages 78, 80 extending between the piston chamber 42 and the third port 68.

In order to open the valve apparatus 200 to flush a lavatory, the latching solenoid valve 76 is pulsed in response to a trigger signal as described above. This causes the valve 76 to open in which position it is held by magnetic means. The pressurised water acting on the side of the diaphragm adjacent the solenoid valve 76 is exhausted from the valve 54 into the cistern 16 via the valve 76. This allows the diaphragm 62 to move away from the second port 66 of the valve 54 allowing pressurised water to pass through the passages 78, 80 into the piston chamber 42. At the same time as the diaphragm 62 opens the second port 66, the member 64 blocks the third port 68. Accordingly, the pressure in the piston chamber increases and generates a lifting force acting on the underside 48 of the piston. When this force is sufficient to overcome the force of the compression spring 36, the piston rises in the chamber 42 and causes the outlet valve means 12 to move from a flow preventing position to a flow permitting position thereby allowing water W stored in the cistern 16 to discharge via the discharge passage 20 as shown in Figure 7.

The valve apparatus 200 does not include means for preventing movement of the float 82 which moves downwardly as the level of water in the cistern opening the exhaust aperture 100. Accordingly, the pressurised water acting on the side of the diaphragm 88 adjacent the exhaust aperture flows away into the cistern whereby the pressure of the water acting on the opposite side of the diaphragm causes the diaphragm to move to the position shown in Figure 7 thereby unblocking the upstream end of the exit port 92 of the filling valve 54. Thus pressurised water is able to flow from the inlet port 58 of the multi-port valve 54 into the exit port 92. However, the discharge of pressurised water to refill the cistern is prevented since when the outlet valve means 12 is in the flow permitting position, the upper side 202 of the piston 40 moves against and blocks the downstream end of the exit port 92 as shown in Figure 7. A seal 204 can be provided in the side 202 of the piston in order to more effectively block the flow of water to the outlet 94.

At the end of the flushing cycle, the solenoid valve 76 is pulsed to cause it to return to a closed position. With the solenoid valve 76 closed, the pressurised water passing through the aperture in the diaphragm 62 generates an increasing force acting on the side of the diaphragm adjacent the solenoid valve which force is eventually sufficient to cause the diaphragm to move into the position shown in Figure 8 in which the second port 66 is blocked. Simultaneously, the third port 68 is unblocked by virtue of the fact that the member 64 is constrained to move with the diaphragm 62. With the third port 68 unblocked, the pressurised water acting on the underside 48 of the piston is exhausted into the cistern 16 allowing the outlet valve means 12 to return to a flow preventing position under the influence of the compression spring 36.

When the outlet valve means 12 moves to the flow preventing position, the downstream end of the exit port 92 is simultaneously unblocked allowing pressurised water supplied via the inlet port 58 to discharge into the cistern via the valve apparatus outlet 94. The cistern is then filled with water until the float rises to the position shown in Figure 6 in which the exhaust aperture 100 of the filling valve is closed. When the exhaust aperture is closed the pressure acting on the side of the diaphragm 88 adjacent to the aperture gradually increases as pressurised water passes through the aperture in the diaphragm. The diaphragm 88 is thus caused to move to the position shown in Figure 6 in which the upstream end of the exit port 92 is blocked thereby preventing further discharge of pressurised water into the cistern 16. The flushing cycle is then complete and the valve apparatus 200 returned to the equilibrium condition.

It will be appreciated that as with the first embodiment, the valve apparatus 200 is adapted such that discharge of the pressurised water from the outlet 94 is prevented whilst the outlet valve means 92 is in a flow permitting position and thus wasteful discharges of water from the cistern in the event of the outlet valve means 12 fails to close are avoided.

It will be appreciated that Figures 6 to 8 provide only a schematic illustration of the valve apparatus 200. It is envisaged that the arrangement could be such that the outlet valve means 12 acts to directly block the valve apparatus outlet 94 rather than filling valve exit port 92.

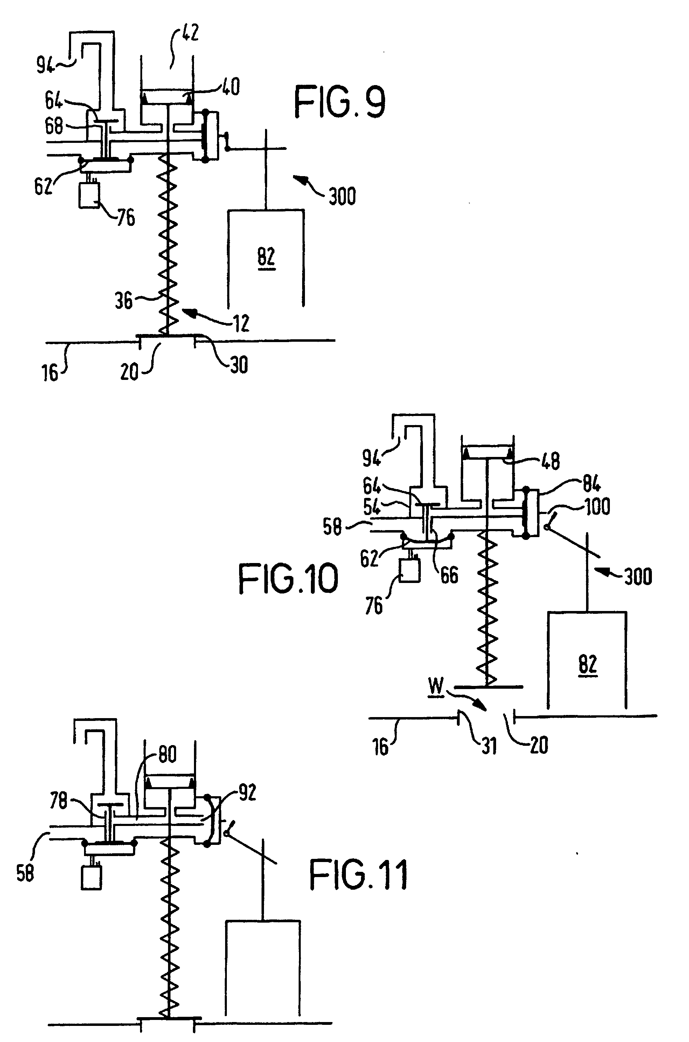

A third embodiment of valve apparatus (generally designated 300) suitable for use as a flushing valve in a water closest cistern will now be described with reference to Figures 9 to 11. As with the second embodiment only those features of the valve apparatus 300 which differ from the valve apparatus 10 will be described in any detail and like or similar features will be indicated by like reference numerals.

As with the valve apparatus 200, in the third embodiment, no means is provided for preventing movement of the float 82. In this embodiment the interlock feature is obtained as a result of the interconnection of the members 62, 64 which act on the second and third ports of the multi-port valve 54.

Figure 9 shows the valve apparatus 300 in an equilibrium condition with the outlet valve means 12 spring-biassed to a flow preventing position in which the diaphragm 30 sealingly engages the valve seat 31. In this condition each side of the respective diaphragms 62, 88 of the multi-port valves 54, 84 is exposed to pressurised water at the same pressure thus maintaining the valves in a closed condition. In this condition, the multi-port valve 54 prevents the supply of water to the underside 48 of the piston 40 and exposes that side of the piston to atmospheric pressure via the passages 78, 80 extending between the piston chamber 42 and third port 68.

In order to open the valve apparatus 300 to flush a lavatory, the latching solenoid valve 76 is pulsed in response to a trigger signal as described in connection with the first embodiment. This causes the same effects as in the second embodiment: that is the solenoid valve latches open, the diaphragm 62 of the multi-port valve 54 is moved away from the second port 66 causing the outlet valve means 12 to be opened by hydraulic pressure acting on the underside 48 of the piston 40 so that water W stored in the cistern 16 is discharged through the discharge passage 20 into the lavatory. This condition of the valve apparatus 300 is illustrated in Figure 10.

As the level of the water stored in the cistern 16 diminishes, the float 82 falls correspondingly thereby opening the exhaust aperture 100 of the filling valve 84. As with the previous embodiments, this causes a pressure imbalance across the diaphragm 88 of the filling valve 54 causing the diaphragm to move to the position shown in Figure 11. In this position, the exit port 92 is unblocked whereby pressurised water can pass through the filling valve 84. However, whilst the diaphragm 62 of the multi-port valve 54 is in the position shown in Figure 10 which is required in order to maintain the outlet valve means 12 in a flow permitting position, the member 64 blocks the third port 68 of the valve 54. Thus, although the exit port 92 of the filling valve 84 is unblocked, there is no discharge of pressurised water to refill the cistern 16, since the flow path between the exit port 92 and the valve apparatus outlet 94 is blocked by the member 64.

When the required volume of water has discharged from the cistern 16, the solenoid valve 76 is pulsed again in order to close it. As with the previous embodiments, when the solenoid valve 76 is closed, the diaphragm 62 of the multi-port valve 54 returns to its equilibrium position in which the second port 66 is blocked and the third port is unblocked so that the pressure acting on the piston 40 is released allowing the biassing spring 36 to return the outlet valve means to the flow preventing position. This is the condition of the valve apparatus 300 shown in Figure 11. By virtue of the interconnection of the diaphragm 62 and member 64, when the diaphragm moves to the position which causes the outlet valve means 12 to close, the member 64 moves away from and thereby unblocks the third port 68 allowing pressurised water to flow from the filling valve 84 through the outlet 94 to refill the cistern.

The cistern fills with water discharged from the outlet 94 until the float rises to a position in which the exhaust aperture 100 is blocked. As with the previous embodiments, this causes the filling valve 84 to close thereby preventing the flow of pressurised water to the valve apparatus outlet 94 and thus preventing further discharge of pressurised water into the cistern via the outlet 94. The flushing cycle is then complete and the valve apparatus 300 returned to its equilibrium position.

It is to be understood that the illustrations of the first to third embodiments in Figures 3 to 11 are purely schematic. Flow passages which appear to extend in parallel and in the same plane in the Figures will not necessarily do so in practice. The skilled person will readily appreciate that many different physical layouts will provide a valve apparatus according to these schematic illustrations. For example, in any embodiment, separate water receiving inlets can be provided for the multi-port valve 54 and filling valve 84 as shown in Figures 3 to 5 or a common water inlet can be provided as shown in Figures 6 to 11.

It will be understood, that the feature of the housing which defines the piston chamber being releaseably securable to the valve apparatus provides the advantage that the apparatus can readily be adapted to operate with supply sources at a wide variety of pressures simply by fitting an appropriately sized piston and piston chamber to the apparatus.

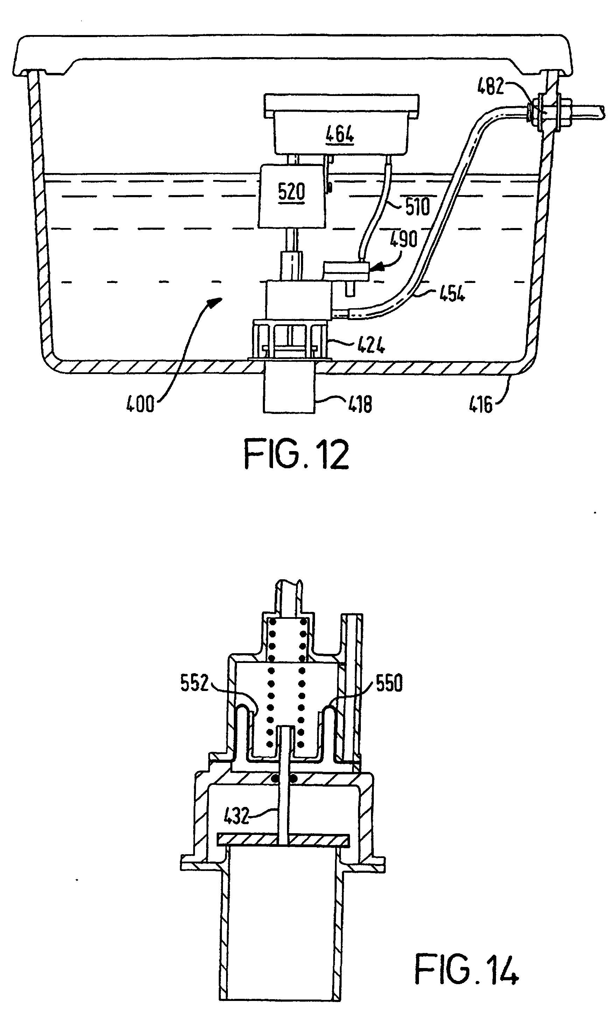

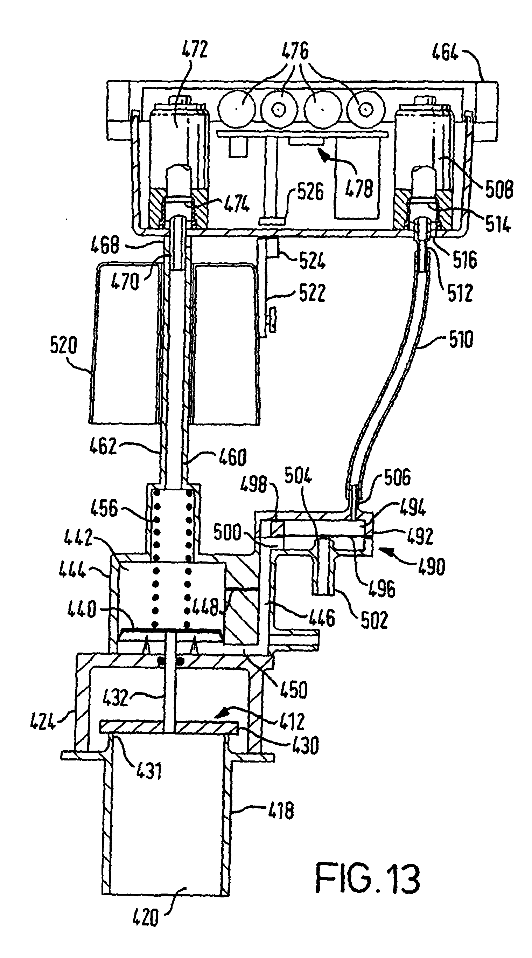

A fourth embodiment of valve apparatus (generally designated 400) suitable for use as a flushing valve in a water closet cistern will now be described with reference to Figures 12 and 13.

The valve apparatus 400 comprises outlet valve means 412 and locating means for locating the outlet valve means relative to an opening in a water closest cistern 416.

The locating means comprises a tubular element 418 which defines a discharge passage 420 and is provided with external threading whereby it can be secure to the water closest cistern by means of a nut (not shown). The locating means further comprises a fenestrated cup-like body 424 which partially houses the outlet valve means. As with the previous embodiment the cup-like body 424 may be securable to the tubular element by means of a twist lock arrangement.

The outlet valve means 412 comprises a flat sealing element 430 which in a flow preventing position of the valve means sealingly engages a valve seat 431 defined by the tubular element 418.

The sealing element 430 is connected by a shaft 432 to a cup-washer 440. The cup-washer 440 is housed in a chamber 442 defined by a housing 444 which is formed integrally with the cup-like body 424. The shaft 432 penetrates the lower end of the housing 444 and is sealingly engaged by an O-ring so as to prevent leakage from the chamber 442.

A passage 446 defined by the housing 444 extends in the lengthwise direction thereof and communicates with a first inlet 448 and a second inlet 450 each leading into the chamber 442. The first inlet 448 is arranged to allow water from the passage 446 to enter the chamber to act on a first side (the upper side as viewed in Figure 13) of the cup-washer and the second inlet is arranged to allow water from the passage to enter the chamber to act on a second side (the lower side as viewed in Figure 13) of the cup-washer. A projection 452 which defines an inlet leading to the passage 446 extends from the housing 444 and is adapted to have a flexible water supply hose 454 fitted thereto.

A compression spring 456 is disposed in the chamber 442 and acts against the upper side of the cup-washer 440 to bias the outlet valve means to a flow preventing position.

An exhaust passage 460 defined by a wall 462 which is integral with the housing 444 extends from the chamber 442 to a control box 464. The control box is disposed above the water level 466 in the cistern 416. An exhaust aperture 468 is provided in the wall 462 adjacent the location at which it enters the control box 464. An insert 470 is fitted in the passage 460 so as to prevent water passing directly from the passage to the exhaust aperture 468.

It will be appreciated that the length of the wall defining the exhaust passage can be readily adapted such that the control box will always be disposed above the intended maximum level of fluid to be stored in the cistern. Additionally, mounting the control box on the wall 462 simplifies installation of the valve apparatus 400 since it can be fixed in position in the cistern simply by securing the tubular element 418 to the cistern.

A magnetically latching solenoid valve 472 is mounted inside the control box 464 such that a valve member 474 thereof seats against the downstream end of the insert 470 for preventing fluid flow from the passage 462 to the exhaust aperture 468.

The first inlet 448 is very small and is sized such that the flow of pressurised fluid therethrough will be considerably slower than the flow of the fluid through the exhaust pathway defined by the exhaust passage 462, exhaust aperture 468, insert 470 and solenoid valve 472.

The control box 464 also contains batteries 476 for energising the solenoid valve 472 and control circuitry 478 for controlling the operation of the solenoid valve in response to signals provided by an infrared sensor mounted in a front face of the cistern 416 in a position in which a flush handle would conventionally be fitted.

Referring to Figure 12, the flexible tube 454 extends from the projection 452 to a water inlet device 482 mounted in a side wall of the cistern. The water inlet 482 is adapted to be connected with the flexible tube and externally of the cistern is connected to a pressurised water source which may be either the mains water supply or a header tank.

In the closed, equilibrium, position of the valve apparatus 400 the sealing element 430 is held in sealing engagement with the valve seat 431 preventing the discharge of water from the cistern 416. As long as a fluid pressure balance is maintained on the cup-washer 440 the sealing element 430 will be held against the valve seat by the force exerted by the compression spring 456 assisted by the force exerted on the sealing element by the pressure of the water in the cistern 416.

The fluid pressure balance acting on the cup-washer 440 exists because each side of the cup-washer is exposed to water from a common source, ie the pressurised water supply to the cistern. The pressurised water is conducted to the underside of the cup seal via the flexible tube 454, passage 446 and second inlet 450 and from the passage 446 to the upper side of the cup-washer via the first inlet 448. The cross-section area of the two sides of the cup-washer is substantially the same so that forces generated by fluid pressure acting on the cup-washer are substantially equal.

In order to operate the valve apparatus 400 so that the contents of the cistern 416 can be used to flush a lavatory, the user passes a hand in front of the infra red sensor. This generates a signal which is amplified by the control circuitry 478. The amplified control signal briefly energises the coil of the solenoid valve 472 causing the valve member 474 to lift. The valve magnetically latches in the lifted position. With the valve member 474 thus lifted pressurised water in the chamber 442 acting on the upper-side of cup-washer 440 is exhausted into the cistern at a location which is at atmospheric pressure via the exhaust passage 460, the insert 470, the solenoid valve 472 and the exhaust aperture 468. The first inlet 448 through which pressurised water is supplied for acting on the upper side of the cup-washer is so small that water cannot be supplied at a rate sufficient to replace the water which is exhausted from the chamber. This sets up a pressure imbalance on the cup-washer 440 and the force generated by the pressurised water acting on the underside of the cup-washer is sufficient to overcome the force of the spring 456 and the tank pressure water acting on the sealing element 430. Accordingly, the cup-washer is pushed upwards in the chamber 442 by the water pressure acting on the underside thereof. The upward movement of the cup-washer 440 causes the sealing element 430 to be lifted away from the valve seat 431. This allows water-in the cistern to pass into the discharge passage 420 via the fenestrated cup-like body 424.

After a predetermined period sufficient to discharge the contents of the cistern the control circuitry 478 provides a reverse polarity signal to the latching solenoid valve 472 so that the valve member 474 is released and returns to the closed position. With the exhaust pathway thus blocked, the chamber 442 above the cup-washer gradually fills with pressurised water conducted from the water inlet 482 via the flexible tube 454, passage 446 and first inlet 448. Eventually the water pressure acting on the upper side of the cup-washer and the force applied by the spring 456 is sufficient to overcome the force generated by the water pressure acting on the underside of the cup-washer which is therefore driven downwardly in the chamber 442. The downward movement of the cup-washer returns the sealing element 430 to a position in which it seals against the valve seat 431. The cistern is then refilled to the desired water level 466 under the control of an integral control valve arrangement for controlling filling of the cistern.

The control valve arrangement comprises a filling valve 490. The filling valve 490 consists of a housing 492 defining a chamber 494 and a flexible diaphragm 496 which is mounted in the chamber. The housing 492 is a split housing and the lower portion (as viewed in Figure 13) is integral with the housing 444. The diaphragm 496 divides the chamber into two portions which have respective inlets 498, 500. The inlets 498, 500 are in flow communication with the passage 446 for supplying pressurised water to the chamber 494 to act on each of the opposed sides of the diaphragm 496.

The housing 492 defines an outlet port 502 and a valve seat 504. In a closed condition of the filling valve 490 the diaphragm 496 sealingly engages the valve seat 504. The housing also defines an exhaust spigot 506 having an exhaust port extending therethrough. The exhaust spigot 506 communicates with the portion of the chamber 494 which receives pressurised fluid via the inlet 498 which is sized relative to the exhaust spigot port such that fluid can be exhausted from the chamber at a faster rate than it is input through the inlet 498.

An exhaust control valve is provided for the filling valve 490 in the form of a latching solenoid valve 508 which is housed in the control box 464. A flexible tube 510 extends from the exhaust spigot 506 to an insert 512 which projects from the control box 464. A valve member 514 of the solenoid valve 508 is sealingly engageable with the end of the insert which is disposed in the control box for blocking the exhaust pathway from the filling valve 490. An exhaust port 516 is provided in the control box in flow communication with the solenoid valve 508. The solenoid valve is moveable between its open and closed positions in response to control signals provided by the control circuitry 478.

The solenoid valve 508 is actuated by level detecting means comprising a float 520. The float 520 has a centrally disposed through-bore and is arranged to be guided by the wall 462 which defines the exhaust passage 460.

A support arm 522 is fitted to the float 520 and carries a magnet 524 which forms one part of a reed switch, the other part of which is indicated at 526.

When the sealing element 430 returns to the flow preventing position shown in Figure 13 after the discharge of water from the cistern 416 the control circuitry 478 is aware that the outlet valve means 412 has been closed due to the polarity of the pulse used to close the solenoid valve 472. Since the water level 466 in the cistern is reduced by the discharge, the float 520 will have moved downwardly from the position shown in Figure 13 thereby moving the magnet 524 away from the control box 464 so that the reed switch is open. The open condition of the reed switch in conjunction with the closed condition of the solenoid valve 472 prompts the control circuitry to pulse the latching solenoid valve 508 causing the valve member 514 to be lifted away from the insert 516 thereby opening the exhaust pathway from the filling valve 490. The valve member 514 is magnetically latched in the lifted position.

With the exhaust pathway open, the pressurised water acting on the upper side of the diaphragm 496 is exhausted to the cistern 416 via the exhaust port 516. Since the rate of exhaust is greater than the rate at which fluid is supplied via the inlet 498 the pressure acting on the upper side of the diaphragm falls rapidly. This allows the diaphragm to be pushed away from the valve seat 504 by the pressurised fluid acting on the underside of the diaphragm so that the fluid can pass through the outlet port 502 to refill the cistern 416.

As the cistern fills, the float 520 rises towards the control box 464 until it reaches a position at which the magnet 524 closes the reed switch. This prompts the control circuitry 478 to provide a reverse polarity signal to the solenoid valve 508 releasing the valve member 514 which then seals against the insert 512 closing the exhaust pathway. With the exhaust pathway closed, the pressurised water passing through the inlet gradually fills the upper portion of the chamber 494 until a pressure balance exists across the diaphragm 496. When the pressure balance is established the diaphragm rests against the valve seat 504 closing the filling valve 490.

Figure 14 shows a modified version of the valve apparatus 400. The difference between the two versions is that a rolling diaphragm 550 is provided instead of the cup-washer 440. A backing member 552 is disposed against the upper side (as viewed in the drawing) of the rolling diaphragm 550 and is fixed to the valve shaft 432.

It will be understood that the valve apparatus of the embodiments is particularly suitable for operation by battery power since electrical energy is only required in the form of pulses for opening and closing the solenoid valves. The valve members of the apparatus are moved to their open positions by means of pressurised fluid fed to the cistern and thus the power source for moving the valve member can be the fluid which is to be stored in the vessel. In the preferred use of the valve apparatus as a flushing valve in a water closet cistern the power source moving the valve means is the water supply to the cistern.

It will be appreciated that the valve apparatus is suitable for use in fluids storage vessels other than water closet cisterns and that a mains water supply or a supply of pressurised water from a header tank could be used to control the valve apparatus for dispensing liquids other than water from the storage vessel.

It will be appreciated that the valve apparatus of the embodiments can readily be retrofitted to existing fluids storage vessels. In the case of a water closet cistern for a lavatory, the tubular member can readily be fitted in place of the outlet spigot of a conventional syphon valve and the infra red sensor can be fitted in place of the conventional flush handle. It will also be appreciated that the twist-lock arrangement facilitates easy repair and maintenance of the valve apparatus since the moving parts of the apparatus can quickly and easily be removed from and re-fitted to the vessel.

It will be understood that it is not essential that the body connected with the outlet valve means forms a perfect seal with the chamber therefor. Some leakage past the body is permissible provided that a pressure differential across the body sufficient to move the outlet valve means to a flow permitting position and maintain can be obtained.

It will be appreciated that the control circuitry and a battery power source therefor for the first three embodiments can conveniently be housed on an upper portion of the valve apparatus above the water level in the storage vessel to thereby simplify installation.

It will be understood that the valve apparatus of the embodiments may be triggered by means other than an infra red sensor device. For example a switch operable by a user can be employed. In place of a solenoid valve actuable to cause the outlet valve means to move from the flow preventing position, a push button valve operable by a user could be provided for bleeding water pressure from the valve apparatus via a flexible tube. Alternatively, the outlet valve means may be manually raised from the flow preventing position without the aid of magnetic forces or water pressure.

It will be appreciated that in each of the embodiments an interlock is provided between the outlet valve means and the filling valve so that pressurised fluid to be stored in the storage vessel in which the apparatus is fitted is not discharged from an outlet of the apparatus to refill the vessel whilst the outlet valve means is in a flow permitting position. The storage vessel is only refilled when the outlet valve means has at least substantially returned to a flow preventing position. Thus wastage of the fluid to be stored in the vessel can be avoided.

## Claims

1. Valve apparatus for use in fluids storage vessels, the apparatus comprising an inlet (90) for receiving a pressurised fluid to be stored in such a storage vessel (16), an outlet (94) for discharging said pressurised fluid into said vessel, means (82,84,88) for controlling flow of said pressurised fluid between said inlet (90) and outlet (94), and outlet valve means (12) moveable from a flow preventing position to a flow permitting position to permit discharge of fluid stored in said vessel via an opening (20) in said vessel, wherein the apparatus is adapted such that, in use, discharge of said pressurised fluid from said outlet (94) to refill said vessel is at least delayed following movement of the outlet valve means (12) to its flow permitting position, **characterised by** means (110,98) operatively connected between the outlet valve means (12) and the flow controlling means (88) to positively prevent activation of said flow controlling means (88) to allow refilling of the vessel unless and until the outlet valve means (12) has at least substantially returned to its flow preventing position.

2. Apparatus as claimed in claim 1, wherein said flow controlling means comprises float means (98,82) for detecting the level of said fluid stored in said vessel.

3. Apparatus as claimed in claim 1 or further comprising locating means (18) for locating said outlet valve means (12) relative to said opening (20).

4. Apparatus as claimed in claim 3, wherein said locating means (18) comprises means defining a discharge passage (20), said passage defining means being securable in said opening of said vessel.

5. Apparatus as claimed in claim 3 or 4, wherein said locating means (18) defines a valve seat (31) which is engaged by said outlet valve means (12) when in said flow preventing position.

6. Apparatus as claimed in any one of the preceding claims, wherein said outlet valve means (12) is adapted to be moved from said flow preventing position to a said flow permitting position by means of a force generated by a pressurised fluid.

7. Apparatus as claimed in claim 8, wherein said outlet valve means (12) comprises a body (40) and means (44) defining a chamber for said body, the arrangement being such that, in use, a first side (48) of said body (40) can be selectively exposed to said pressurised fluid to generate said force for moving the outlet valve means (12) from said flow preventing position to a said flow permitting position.

8. Apparatus as claimed in claim 9, wherein a second side of said body (40) disposed opposite said first side (48), is exposed to atmospheric pressure.

9. Apparatus as claimed in claim 7 or 8, wherein said chamber defining means (44) is releasably fitted to the apparatus.

10. Apparatus as claimed in any one of claims 6 to 9, further comprising a multi-port valve (54) for actuating said outlet valve means (12), said valve having a first port (58) for receiving said pressurised fluid and being adapted to selectively communicate said pressurised fluid with said first side (48) of the body (40) via a second said port (66) to move said outlet valve means (12) from said flow preventing position and exhaust said pressurised fluid acting on said first side (48) via a third said port (68) to permit said outlet valve means (12) to return to said flow preventing position.

11. Apparatus as claimed in claim 10, wherein said multi-port valve (54) has a respective members (62,64) for blocking flow through said second port (66) and said third port (68), said members (62,64) being interconnected such that when one of said second and third ports (66,68) is open the other said port (68,66) is blocked.

12. Apparatus as claimed in claim 11, wherein one of the said members (62,64) for blocking said second port (66) comprises a diaphragm (62) each side of which, in use, is exposed to said pressurised fluid and said multi-port valve (54) is provided with exhaust means (76) for selectively exhausting the said pressurised fluid acting on the side of said diaphragm remote from said second port (66) to cause said diaphragm (62) to open said second port (66).

13. Apparatus as claimed in claim 12, wherein said exhaust means (76) comprises a latching solenoid valve.

14. Apparatus as claimed in claim 12 or 13, further comprising an infrared sensing device for providing a signal for actuating said exhaust means (76).

15. Apparatus as claimed in any one of claims 3 to 14, when dependent on claim 2, wherein said means (110,98) operatively connecting the outlet valve means to the flow controlling means comprises means (116) for preventing movement of said float means (98,82).

16. Apparatus as claimed in claim 15, wherein said means for preventing movement of said float means (98,82) comprises linkage means (110,116) connected with said outlet valve means (12) and engageable with said float means (98,82).

17. Apparatus as claimed in claim 16, wherein said linkage means (110,116) defines a stop surface (118) which is arranged to cooperably engage said float means (98,82) to prevent movement thereof when said outlet valve means (12) is moved from said flow preventing position and to permit said float means to disengage when said outlet valve means has at least substantially returned to said flow preventing position.

18. Apparatus as claimed in claim 15, 16 or 17, wherein said means for preventing movement of said float means (98,82) is adapted to be able to lift said float means from a position in which flow of pressurised fluid between said inlet (90) and outlet (94) is allowed to a position in which said flow is prevented by movement of said outlet valve means (12) from said flow preventing position.

19. Apparatus as claimed in claim 18 when dependent on claim 17, wherein said linkage means (110,116) defines a support surface (120) extending transversely of said stop surface (118) for lifting said float means (98,82).

20. Apparatus as claimed in any one of claims 15 to 19, wherein said means (110,116) for preventing movement of said float means (98,82) is adapted to permit manual operation of said outlet valve means (12).

21. Apparatus as claimed in any one of the preceding claims, wherein said flow controlling means (82,84) comprises a multi-port filling valve (84).

22. Apparatus as claimed in claim 21, wherein said filling valve (84) comprises a member (88) for selectively blocking an outlet port thereof, said filling valve being arranged such that, in use, each side of said member is exposed to said pressurised fluid and exhausting the said fluid acting on one side of said member causes unblocking of said outlet port (94).

23. Apparatus as claimed in claim 21 or 22, wherein a port (92) of said filling valve (84) defines said inlet (90) for receiving a pressurised fluid to be stored in said vessel.

24. Apparatus as claimed in any one of the preceding claims wherein said outlet valve means (12) is adapted to permit overtravel when returning to said flow preventing position.

25. Apparatus as claimed in claim 24 wherein said outlet valve means (12) comprises sealing means (30) for sealingly preventing discharge of fluid via said opening (20) in said vessel, said sealing means comprising a non-planar diaphragm (30) for permitting said overtravel.

26. Valve apparatus for use in fluids storage vessels, said valve apparatus comprising an outlet valve means (12) for controlling discharge of fluid from such a vessel and a filling valve means (84) for controlling input of fluid to such a vessel and further comprising means (76,36) for actuating said outlet valve means (12) and filling valve means (84), **characterised in that**, each said valve means (12,84) has or is associated with a chamber containing a member (62,64;88) having a first side and a second side, each of which sides being exposed, in use, to a pressurised fluid and each said member (62,64;88) being independently moveable to open the respective said valve means (12,84) by the said pressurised fluid acting on the second said side thereof when the said pressurised fluid acting on the first said side thereof is released, said actuating means (76,36) comprising means operatively connected between the outlet valve means (12) and the filling valve means (84) to positively prevent input of fluid from said filling valve means (84) to refill said vessel unless and until said outlet valve means has at least substantially returned to a discharge preventing position.

27. Valve apparatus for use in fluids storage vessels, said valve apparatus comprising filling valve means (84) operable by float means (82), outlet valve means (12) for controlling discharge of fluid from such a vessel, **characterised by** means operatively connected between said filling valve means and said outlet valve means to positively prevent discharge of fluid from said filling valve means (84) to refill such a vessel unless and until said outlet valve (12) means is at least substantially closed.

## Patentansprüche

1. Ventilgerät für einen Fluidaufbewahrungsbehälter, mit einem Einlass (90) zum Empfangen eines Überdruckfluids, das in einem solchen Aufbewahrungsbehälter (16) aufbewahrt werden soll, einem Auslass (94) zum Auslassen des Überdruckfluids in den Behälter, Vorrichtungen (82, 84, 88) zum Kontrollieren des Durchflusses des Überdruckfluids zwischen dem Einlass (90) und dem Auslass (94), und einer Auslassventilvorrichtung (12), die von einer Durchfluss-Verhinderposition in eine Durchfluss-Erlaub-Position bewegbar ist, um das Auslassen des in dem Behälter gespeicherten Fluids über eine Behälteröffnung (20) zu erlauben, wobei das Gerät derart ausgebildet ist, dass das Auslassen des Überdruckfluids aus dem Auslass (94), um den Behälter wieder zu befüllen, zumindest gegenüber der Bewegung der Auslassventilvorrichtung (12) in seine Durchfluss-Erlaub-Position verzögert ist,
**gekennzeichnet durch**
Vorrichtungen (110, 98), die mit der Auslassventilvorrichtung (12) und der Durchflusskontrollvorrichtung (88) in Wirkverbindung stehen, um ausdrücklich eine Aktivierung der Durchflusskontrollvorrichtung (88) zur Wiederbefüllerlaubnis des Behälters zu verhindern, außer wenn und solange bis die Auslassventilvorrichtung (12) mindestens im wesentlichen in ihre Durchfluss-Verhinderposition zurückgekehrt ist.

2. Gerät nach Anspruch 1, wobei die Durchflusskontrollvorrichtung eine Schwimmervorrichtung (98, 82) zum Feststellen der in dem Behälter gespeicherten Fluidhöhe umfasst.

3. Gerät nach Anspruch 1 oder 2 mit einer Lokalisiervorrichtung (18) zum Lokalisieren der Auslassventilvorrichtung (12) relativ zu der Öffnung (20).

4. Gerät nach Anspruch 3, wobei die Lokalisiervorrichtung (18) eine Vorrichtung zum Definieren eines Auslassdurchgangs umfasst, die in der Behälteröffnung (20) befestigbar ist.

5. Gerät nach Anspruch 3 oder 4, wobei die Lokalisiervorrichtung (18) einen Ventilsitz (31) definiert, an dem die Auslassventilvorrichtung (12) in der Durchfluss-Verhinderposition angreift.

6. Gerät nach einem der vorhergehenden Ansprüche, wobei die Auslassventilvorrichtung (12) so ausgebildet ist, dass sie mittels einer Kraft, die durch das Überdruckfluid erzeugt ist, von der Durchfluss-Verhinderposition zu der Durchfluss-Erlaub-Position bewegbar ist.

7. Gerät nach Anspruch 6, wobei die Auslassventilvorrichtung (12) einen Körper (40) und eine eine Kammer für den Körper definierende Vorrichtung (44) umfasst, die so angeordnet sind, dass eine erste Seite (48) des Körpers (40) selektiv dem Überdruckfluid ausgesetzt werden kann, um die Kraft zum Bewegen der Auslassventilvorrichtung (12) von der Durchfluss-Verhinderposition zu der Durchfluss-Erlaub-Position zu erzeugen.

8. Gerät nach Anspruch 9, wobei eine zweite Seite des Körpers (40), die der ersten Seite (48) gegenüber angeordnet ist, dem Atmosphärendruck ausgesetzt ist.

9. Gerät nach Anspruch 7 oder 8, wobei die kammerdefinierende Vorrichtung (44) entfernbar an dem Gerät angebracht ist.

10. Gerät nach einem der Ansprüche 6 bis 9 mit einem Mehrwegeventil (54) zum Betätigen der Auslassventilvorrichtung (12) mit einem ersten Anschluss (58) zum Empfangen des Überdruckfluids, das so ausgebildet ist, dass wahlweise das Überdruckfluid über einen zweiten Anschluss (66) mit der ersten Seite (48) des Körpers (40) in Kontakt bringbar ist, um die Auslassventilvorrichtung (12) von der Durchfluss-Verhinderposition wegzubewegen, und das Überdruckfluid, das auf die erste Seite (48) wirkt, über einen dritten Anschluss (68) ausgestoßen wird, um die Auslassventilvorrichtung (12) in die Durchfluss-Verhinderposition zurückkehren zu lassen.

11. Gerät nach Anspruch 10, wobei das Mehrwegeventil (54) entsprechende Elemente (62, 64) zum Blockieren des Durchflusses durch den zweiten (66) und den dritten (68) Anschluss aufweist, die so untereinander verbunden sind, dass, wenn entweder der zweite oder der dritte Anschluss (66, 68) offen ist, der jeweils andere (68, 66) blockiert ist.

12. Gerät nach Anspruch 11, wobei eines der Elemente (62, 64) zum Blockieren des zweiten Anschlusses (66) eine Membran (62) aufweist, deren beide Seiten dem Überdruckfluid ausgesetzt sind, und das Mehrwegeventil (54) mit einer Ausstoßvorrichtung (76) zum selektiven Ausstoßen des Überdruckfluids, das auf die von dem zweiten Anschluss (66) entfernte Seite der Membran wirkt, ausgestattet ist, um den zweiten Anschluss (66) mittels der Membran (62) zu öffnen.

13. Gerät nach Anspruch 12, wobei die Ausstoßvorrichtung (76) ein bistabiles Magnetventil aufweist.

14. Gerät nach Anspruch 12 oder 13, mit einer Infrarot-Sensoreinheit zum Bereitstellen eines Signals für das Betätigen der Ausstoßvorrichtung (76).

15. Gerät nach einem der Ansprüche 3 bis 14, soweit sie von Anspruch 2 abhängig sind, wobei die Vorrichtungen (110, 98), die eine Wirkverbindung zwischen der Auslassventilvorrichtung und der Durchflusskontrollvorrichtung bereitstellen, Vorrichtungen (116) zum Verhindern einer Bewegung der Schwimmervorrichtung (98, 82) umfassen.

16. Gerät nach Anspruch 15, wobei die Vorrichtung zum Verhindern der Bewegung der Schwimmervorrichtung (98, 82) Verbindungsvorrichtungen (110, 116) umfasst, die mit der Auslassventilvorrichtung (12) verbunden sind und an der Schwimmervorrichtung (98, 82) angreifen können.

17. Gerät nach Anspruch 16, wobei die Verbindungsvorrichtungen (110, 116) eine Haltefläche (118) definieren, die so angeordnet ist, dass sie an der Schwimmervorrichtung (98, 82) angreift, um deren Bewegung zu verhindern, wenn die Auslassventilvorrichtung (12) von der Durchfluss-Verhinderposition wegbewegt wird, und um zu erlauben, dass sich die Schwimmervorrichtung löst, wenn die Auslassventilvorrichtung mindestens im wesentlichen zu ihrer Durchfluss-Verhinderposition zurückgekehrt ist.

18. Gerät nach Anspruch 15, 16 oder 17, wobei die Vorrichtung zum Verhindern der Bewegung der Schwimmervorrichtung (98, 82) so ausgebildet ist, dass sie dazu befähigt ist, die Schwimmervorrichtung von einer Position, in der ein Durchfluss des Überdruckfluids zwischen dem Einlass (90) und dem Auslass (94) erlaubt ist, in eine Position anzuheben, in der der Durchfluss verhindert ist, indem die Auslassventilvorrichtung (12) von der Durchfluss-Verhinderposition wegbewegt wird.

19. Gerät nach Anspruch 18, soweit er von Anspruch 17 abhängig ist, wobei die Verbindungsvorrichtungen (110, 116) eine Trägerfläche (120) definieren, die sich transversal zu der Haltefläche (180) erstreckt, um die Schwimmervorrichtung (98, 82) anzuheben.

20. Gerät nach einem der Ansprüche 15 bis 19, wobei die Vorrichtungen (110, 116) zum Verhindern der Bewegung der Schwimmervorrichtung (98, 82) so ausgebildet sind, dass eine manuelle Bedienung der Auslassventilvorrichtung erlaubt ist.

21. Gerät nach einem der vorhergehenden Ansprüche, wobei die Durchflusskontrollvorrichtung (82, 84) ein Mehrwege-Füllventil (84) aufweist.

22. Gerät nach Anspruch 21, wobei das Füllventil (84) ein Element (88) zum selektiven Blockieren eines seiner Auslassanschlüsse aufweist, und derart ausgebildet ist, dass jede Seite des Elements dem Überdruckfluid ausgesetzt ist, und das Ausstoßen des Fluids auf einer Seite des Elements ein Entsperren des Auslassanschlusses (94) verursacht.

23. Gerät nach Anspruch 21 oder 22, wobei ein Anschluss (92) des Fül.lventils (84) den Einlass (90) zum Empfangen des in dem Behälter zu speichernden Überdruckfluids definiert.

24. Gerät nach einem der vorhergehenden Ansprüche, wobei die Auslassventilvorrichtung (12) derart ausgebildet ist, dass ein Durchhub erlaubt ist, wenn die Auslassventilvorrichtung (12) in die Durchfluss-Verhinderposition zurückkehrt.

25. Gerät nach Anspruch 24, wobei die Auslassventilvorrichtung (12) eine Abdichtvorrichtung (30) zum abgedichteten Verhindern eines Fluidausflusses über die Behälteröffnung (20) aufweist, die eine nicht plane Membran (30) zum Erlauben des Durchhubs umfasst.

26. Ventilgerät für einen Fluidaufbewahrungsbehälter, mit einer Auslassventilvorrichtung (12) zum Kontrollieren des Fluidauslasses aus einem solchen Behälter, einer Füllventilvorrichtung (84) zum Kontrollieren des Fluideinlasses in einen solchen Behälter, und mit Vorrichtungen (76, 36) zum Betätigen der Auslassventilvorrichtung (12) und der Füllventilvorrichtung (84),
**dadurch gekennzeichnet, dass**
jede Ventilvorrichtung (12, 84) eine Kammer aufweist, die ein Element (62, 64, 88) mit einer ersten Seite und einer zweiten Seite aufweist, die jeweils einem Überdruckfluid ausgesetzt sind, und jedes Element (62, 64, 88) einzeln bewegbar ist, um die entsprechende Ventilvorrichtung (12, 84) mittels des Überdruckfluids, das auf seine zweite Seite wirkt, zu öffnen, wenn das Überdruckfluid, das auf seine erste Seite wirkt, ausgelassen wird, wobei die Betätigungsvorrichtungen (76, 36) Vorrichtungen aufweisen, die mit der Auslassventilvorrichtung (12) und der Füllventilvorrichtung (84) in Wirkverbindung stehen und ausdrücklich den Fluideinlass von der Füllventilvorrichtung (84) zum Wiederbefüllen des Behälters verhindern, außer wenn und solange bis die Auslassventilvorrichtung mindestens im wesentlichen in eine Auslassverhinderposition zurückgekehrt ist.

27. Ventilgerät für einen Fluidaufbewahrungsbehälter mit einer Füllventilvorrichtung (84), die durch eine Schwimmervorrichtung (82) bedienbar ist, und einer Auslassventilvorrichtung (12) zum Kontrollieren des Fluidauslasses aus einem solchen Behälter,
**gekennzeichnet durch**
Vorrichtungen, die mit der Füllventilvorrichtung und der Auslassventilvorrichtung in Wirkverbindung stehen, um ausdrücklich den Fluidauslass aus der Füllventilvorrichtung (84) zum Wiederbefüllen eines solchen Behälters zu verhindern, außer wenn und solange bis die Auslassventilvorrichtung (12) zumindest im wesentlichen geschlossen ist.

## Revendications

1. Dispositif formant soupape destiné à être utilisé dans des récipients de stockage de fluides, le dispositif comprenant un orifice d'entrée (90) pour recevoir un fluide sous pression à stocker dans un tel récipient de stockage (16), un orifice de sortie (94) pour décharger ledit fluide sous pression dans ledit récipient, un moyen (82, 84, 88) pour commander le flux dudit fluide sous pression entre ledit orifice d'entrée (90) et ledit orifice de sortie (94), et un moyen formant soupape de sortie (12) mobile d'une position empêchant le flux à une position permettant le flux pour permettre l'écoulement du fluide stocké dans ledit récipient par une ouverture (20) réalisée dans ledit récipient, dans lequel le dispositif est adapté pour que, en utilisation, l'écoulement dudit fluide sous pression par ledit orifice de sortie (94) pour remplir à nouveau ledit récipient est au moins retardé suite au mouvement du moyen formant soupape de sortie (12) jusqu'à sa position permettant le flux, **caractérisé par** un moyen (110, 98) connecté fonctionnellement entre le moyen formant soupape de sortie (12) et le moyen de commande de flux (88) pour empêcher de façon positive l'activation dudit moyen de commande de flux (88) pour permettre un nouveau remplissage du récipient à moins que et jusqu'à ce que le moyen formant soupape de sortie (12) soit au moins substantiellement revenu à sa position empêchant le flux.

2. Dispositif selon la revendication 1, dans lequel ledit moyen de commande de flux comprend un moyen formant flotteur (98, 82) pour détecter le niveau dudit fluide stocké dans ledit récipient.

3. Dispositif selon la revendication 1 ou comprenant en outre un moyen de positionnement (18) pour positionner ledit moyen formant soupape de sortie (12) par rapport à ladite ouverture (20).

4. Dispositif selon la revendication 3, dans lequel ledit moyen de positionnement (18) comprend un moyen définissant un passage d'écoulement (20), ledit moyen définissant un passage pouvant être fixé dans ladite ouverture dudit récipient.

5. Dispositif selon la revendication 3 ou 4, dans lequel ledit moyen de positionnement (18) définit un siège de soupape (31) qui coopère avec ledit moyen formant soupape de sortie (12) lorsque celui-ci est dans ladite position empêchant le flux.

6. Dispositif selon l'une quelconque des revendications précédentes, dans lequel ledit moyen formant soupape de sortie (12) est adapté pour être déplacé de ladite position empêchant le flux à ladite position permettant le flux au moyen d'une force produite par un fluide sous pression.

7. Dispositif selon la revendication 8, dans lequel ledit moyen formant soupape de sortie (12) comprend un corps (40) et un moyen (44) définissant une chambre pour ledit corps, l'agencement étant tel que, en utilisation, un premier côté (48) dudit (corps (40) peut être sélectivement exposé audit fluide sous pression pour produire ladite force pour déplacer le moyen formant soupape de sortie (12) de ladite position empêchant le flux à ladite position permettant le flux.

8. Dispositif selon la revendication 9, dans lequel un deuxième côté dudit corps (40) situé à l'opposé dudit premier côté (48) est exposé à la pression atmosphérique.

9. Dispositif selon la revendication 7 ou 8, dans lequel ledit moyen définissant une chambre (44) est monté sur le dispositif de façon amovible.

10. Dispositif selon l'une quelconque des revendications 6 à 9, comprenant en outre un robinet multivoie (54) pour actionner ledit moyen formant soupape de sortie (12), ledit robinet comportant un premier orifice (58) pour recevoir ledit fluide sous pression et étant adapté pour faire communiquer sélectivement ledit fluide sous pression avec ledit premier côté (48) du corps (40) via un deuxième orifice (66) pour faire sortir ledit moyen formant soupape de sortie (12) de ladite position empêchant le flux et faire s'échapper ledit fluide sous pression agissant sur ledit premier côté (48) via un troisième orifice (68) pour permettre audit moyen formant soupape de sortie (12) de revenir à ladite position empêchant le flux.

11. Dispositif selon la revendication 10, dans lequel ledit robinet multivoie (54) comporte un élément respectif (62, 64) pour bloquer le flux par ledit deuxième orifice (66) et par ledit troisième orifice (68), lesdits éléments (62, 64) étant interconnectés de telle manière que lorsque l'un desdits deuxième et troisième orifices (66, 68) est ouvert, l'autre desdits orifices (68, 66) est bloqué.

12. Dispositif selon la revendication 11, dans lequel l'un desdits éléments (62, 64) pour bloquer ledit deuxième orifice (66) comprend un diaphragme (62) dont chaque côté, en utilisation, est exposé audit fluide sous pression et ledit robinet multivoie (54) est muni d'un moyen d'échappement (76) pour faire échapper sélectivement ledit fluide sous pression agissant sur le côté dudit diaphragme éloigné dudit deuxième orifice (66) pour que ledit diaphragme (62) ouvre ledit deuxième orifice (66).

13. Dispositif selon la revendication 12, dans lequel ledit moyen d'échappement (76) comprend une électrovanne à verrouillage.

14. Dispositif selon la revendication 12 ou 13, comprenant en outre un capteur infrarouge pour fournir un signal servant à actionner ledit moyen d'échappement (76).

15. Dispositif selon l'une quelconque des revendications 3 à 14, lorsqu'elle dépend de la revendication 2, dans lequel ledit moyen (110, 98) reliant fonctionnellement le moyen formant soupape de sortie au moyen de commande de flux comprend un moyen (116) pour empêcher le mouvement dudit moyen formant flotteur (98, 82).

16. Dispositif selon la revendication 15, dans lequel ledit moyen pour empêcher le mouvement dudit moyen formant flotteur (98, 82) comprend un moyen de liaison (110, 116) relié audit moyen formant soupape de sortie (12) et pouvant coopérer avec ledit moyen formant flotteur (98, 82).

17. Dispositif selon la revendication 16, dans lequel ledit moyen de liaison (110, 116) définit une surface d'arrêt (118) qui est arrangée pour coopérer avec ledit moyen formant flotteur (98, 82) pour empêcher le mouvement de celui-ci quand on fait sortir ledit moyen formant soupape de sortie (12) de ladite position empêchant le flux et pour permettre audit moyen formant flotteur de se dégager quand ledit moyen formant soupape de sortie est au moins substantiellement revenu à ladite position empêchant le flux.

18. Dispositif selon la revendication 15, 16 ou 17, dans lequel ledit moyen pour empêcher le mouvement dudit moyen formant flotteur (98, 82) est adapté pour être apte à soulever ledit moyen formant flotteur d'une position dans laquelle le flux de fluide sous pression entre ledit orifice d'entrée (90) et ledit orifice de sortie (94) est permis à une position dans laquelle ledit flux est empêché par le mouvement dudit moyen formant soupape de sortie (12) depuis ladite position empêchant le flux.

19. Dispositif selon la revendication 18 lorsqu'elle dépend de la revendication 17, dans lequel ledit moyen de liaison (110, 116) définit une surface de support (120) s'étendant dans la direction transversale de ladite surface d'arrêt (118) pour soulever ledit moyen formant flotteur (98, 82).

20. Dispositif selon l'une quelconque des revendications 15 à 19, dans lequel ledit moyen (110, 116) pour empêcher le mouvement dudit moyen formant flotteur (98, 82) est adapté pour permettre le fonctionnement manuel dudit moyen formant soupape de sortie (12).

21. Dispositif selon l'une quelconque des revendications précédentes, dans lequel ledit moyen de commande de flux (82, 84) comprend un robinet de remplissage multivoie (84).

22. Dispositif selon la revendication 21, dans lequel ledit robinet de remplissage (84) comprend un élément (88) pour bloquer sélectivement un de ses orifices de sortie, ledit robinet de remplissage étant arrangé de telle manière que, en utilisation, chaque côté dudit élément est exposé audit fluide sous pression et l'échappement dudit fluide agissant sur un côté dudit élément provoque le déblocage dudit orifice de sortie (94).

23. Dispositif selon la revendication 21 ou 22, dans lequel un orifice (92) dudit robinet de remplissage (84) définit ledit orifice d'entrée (90) pour recevoir un fluide sous pression à stocker dans ledit récipient.

24. Dispositif selon l'une quelconque des revendications précédentes, dans lequel ledit moyen formant soupape de sortie (12) est adapté pour permettre la surcourse lorsqu'il revient à ladite position empêchant le flux.

25. Dispositif selon la revendication 24, dans lequel ledit moyen formant soupape de sortie (12) comprend un moyen d'étanchéité (30) pour empêcher de manière étanche l'écoulement de fluide par ladite ouverture (20) dudit récipient, ledit moyen d'étanchéité comprenant un diaphragme non plat (30) pour permettre ladite surcourse.

26. Dispositif formant soupape destiné à être utilisé dans des récipients de stockage de fluides, ledit dispositif formant soupape comprenant un moyen formant soupape de sortie (12) pour commander l'écoulement de fluide hors d'un tel récipient et un moyen formant robinet de remplissage (84) pour commander l'entrée de fluide dans un tel récipient et comprenant en outre un moyen (76, 36) pour actionner ledit moyen formant soupape de sortie (12) et ledit moyen formant robinet de remplissage (84), **caractérisé en ce que** chacun desdits moyens formant soupape (12, 84) comporte ou est associé à une chambre contenant un élément (62, 64 ; 88) ayant un premier côté et un deuxième côté, chacun de ces côtés étant exposé, en utilisation, à un fluide sous pression et chacun desdits éléments (62, 64 ; 88) étant mobile indépendamment pour ouvrir le moyen formant soupape respectif (12, 84) au moyen dudit fluide sous pression agissant sur ledit deuxième côté de celui-ci quand ledit fluide sous pression agissant sur ledit premier côté de celui-ci est libéré, ledit moyen d'actionnement (76, 36) comprenant un moyen connecté fonctionnellement entre le moyen formant soupape de sortie (12) et le moyen formant robinet de remplissage (84) pour empêcher de façon positive l'entrée de fluide provenant dudit moyen formant robinet de remplissage (84) pour faire un nouveau remplissage dudit récipient à moins que et jusqu'à ce que ledit moyen formant soupape de sortie soit au moins substantiellement revenu à une position empêchant l'écoulement.

27. Dispositif formant soupape destiné à être utilisé dans des récipients de stockage de fluides, ledit dispositif formant soupape comprenant un moyen formant robinet de remplissage (84) pouvant être actionné par un moyen formant flotteur (82), un moyen formant soupape de sortie (12) pour commander l'écoulement de fluide hors d'un tel récipient, **caractérisé par** un moyen connecté fonctionnellement entre ledit moyen formant robinet de remplissage et ledit moyen formant soupape de sortie pour empêcher de façon positive l'écoulement de fluide par ledit moyen formant robinet de remplissage (84) pour faire un nouveau remplissage dudit récipient à moins que et jusqu'à ce que ledit moyen formant soupape de sortie (12) soit au moins substantiellement fermé.
